# FASCICULE DE BREVET EUROPEEN

(11) **EP 2 978 994 B1**
(45) Date de publication et mention de la délivrance du brevet: **02.08.2017**
(21) Numéro de dépôt: 14708636.7
(22) Date de dépôt: 14.02.2014
(51) Int. Cl.: G01M 15/12, G01M 1/32, G01H 1/00, F16F 15/28

(54) **PROCEDE POUR EQUILIBRER UN MOTEUR A COMBUSTION INTERNE DANS UN VEHICULE**
VERFAHREN ZUM AUSWUCHTEN EINES VERBRENNUNGSMOTORS IN EINEM FAHRZEUG
METHOD FOR BALANCING AN INTERNAL COMBUSTION ENGINE IN A VEHICLE

(30) Priorité: 26.03.2013 FR 1352690
(43) Date de publication de la demande: 03.02.2016
(73) Titulaire: Peugeot Citroën Automobiles SA, 78140 Vélizy Villacoublay (FR)
(72) Inventeur: SAUVAGE, Olivier, F-92800 Puteaux (FR); GAUDIN, Arnaud, F-92140 Clamart (FR); LE BOULANGER, Xavier, F-92310 Sevres (FR); DIERICK, Gerard, F-91120 Palaiseau (FR); LE GUILLOU, Daniel, F-95870 Villers Les Nancy (FR)
(86) Numéro de dépôt international: PCT/FR2014/050299
(87) Numéro de publication internationale: WO 2014/154960

(56) Documents cités:
- FR-A- 1 046 797
- FR-A1- 2 902 479
- FR-A1- 2 967 508
- US-A1- 2009 000 589

## Description

L'invention porte sur un procédé d'équilibrage inertiel optimisé d'un moteur alternatif à combustion interne de véhicule automobile.

L'invention trouve une application particulièrement avantageuse avec les moteurs ayant un nombre impair de cylindres en ligne, en général trois ou cinq, qui posent des difficultés particulières d'équilibrage, et plus généralement les moteurs qui possèdent un attelage mobile présentant peu de plans de symétries géométriques.

Dans les moteurs alternatifs à combustion interne, il est bien connu d'équilibrer les forces d'inertie produites par les mouvements de l'attelage mobile, notamment de rotation du vilebrequin, de translation des pistons dans les cylindres et, de rotation et de translation des bielles, afin d'éviter les vibrations du moteur que ces mouvements internes occasionnent.

On se reportera par exemple au traité de référence de Swoboda (Mécanique des moteurs alternatifs, édition Technip, 1984), qui détaille différentes techniques pour réaliser cet équilibrage. Une manière classique de procéder est de distinguer des masses ayant un mouvement de rotation (masses rotatives) et des masses ayant un mouvement de translation (masses alternatives), l'objectif étant de superposer les équilibrages nécessaires pour chacun des deux types de masses en mouvement.

L'équilibrage des masses rotatives se fait classiquement par ajout de contrepoids opposés aux manetons du vilebrequin et généralement intégrés dans l'architecture du vilebrequin.

L'équilibrage des masses alternatives peut être effectué suivant plusieurs techniques différentes. Une première technique consiste à ajouter un ou plusieurs arbres additionnels, dits arbres d'équilibrage, entraînés en rotation par le vilebrequin et permettant de contrebalancer les efforts inertiels produits par ces masses alternatives. Le document Swoboda décrit ainsi plusieurs méthodes basées sur l'utilisation d'un arbre d'équilibrage contrarotatif qui vient s'ajouter à l'attelage mobile initial. Pour les moteurs à trois cylindres en ligne, de telles méthodes permettent, à l'ordre 1 de rotation du moteur, d'équilibrer totalement la contribution des masses alternatives aux efforts d'origine inertielle que génère le groupe moto-propulseur.

Toutefois, l'utilisation d'arbres d'équilibrage présente notamment l'inconvénient de générer un surcoût de production, d'augmenter la masse du moteur ainsi que la complexité de son architecture, et de générer potentiellement des bruits liés à leur entraînement difficiles à maîtriser.

Dans d'autres techniques qui ne font pas appel à des arbres d'équilibrage, on réalise un équilibrage partiel des efforts inertiels en ajoutant des masses d'équilibrage liées au vilebrequin. Dans ce cas, un groupe moto-propulseur à trois cylindres en ligne par exemple générera des couples de galop et/ou de lacet plus ou moins importants selon l'ordre 1 du moteur. Une technique depuis longtemps en usage consiste notamment à utiliser des masses coplanaires avec l'axe du vilebrequin dont le plan fait un angle de 30° avec l'axe des fûts du moteur.

Les documents FR1046797 et DE972427 décrivent une méthode d'équilibrage inertiel d'un attelage mobile d'un moteur alternatif faisant appel à des masses additionnelles dont deux sont positionnées aux extrémités du vilebrequin. Cet équilibrage est réalisé avec des évidements et/ou des contrepoids rapportés en forme d'anneau ou d'arc de cercle. L'utilisation de contrepoids ou d'évidements placés aux extrémités du vilebrequin (volant moteur, poulie de distribution) pour participer à l'équilibrage inertiel de l'attelage mobile se rencontre également dans le document DE102009047545, le document DE10245376, ou encore le document FR2779493.

Le document DE102011000585 décrit par ailleurs l'utilisation d'un moyen élastique permettant de faire varier la position des masses en fonction de la vitesse de rotation du moteur pour obtenir un équilibrage adaptatif.

Dans d'autres méthodes décrites par exemple dans le document DE102011078356, la position angulaire des contrepoids ajoutés ne correspond pas à la valeur théorique usuelle de position angulaire de 30° (modulo 180°) mais à des valeurs différentes (par exemple de 25 ou 20°), ce qui permet de réduire notamment les accélérations angulaires du groupe motopropulseur.

Un inconvénient des méthodes existantes réside notamment dans la détermination des valeurs de dimensionnement des contrepoids et/ou des évidements destinés à l'équilibrage inertiel qui n'est pas toujours optimum du point de vue des vibrations ressenties par les occupants du véhicule. En effet, plusieurs éléments relevant de la conception globale du véhicule et de l'adaptation du moteur dans celui-ci, comme par exemple la position des points d'attache ou le comportement des cales de suspension moteur, interagissent avec l'équilibrage du vilebrequin de l'attelage mobile du moteur pour donner un résultat qui n'est pas forcément satisfaisant pour les occupants du véhicule.

En outre, certaines méthodes de dimensionnement sont basées sur l'utilisation d'une modélisation mécanique des systèmes mécaniques impliquant des simplifications importantes. Ainsi par exemple, le groupe motopropulseur est considéré non déformable, réductible à son centre d'inertie, représentable par une matrice d'inertie 3D, et les raideurs des cales sont supposées linéaires. Or de telles simplifications peuvent engendrer une mauvaise représentativité des bruits et vibrations néfastes générés par le moteur alternatif.

L'invention vise à remédier à au moins un de ces inconvénients en proposant un procédé d'équilibrage inertiel d'un moteur alternatif à combustion interne d'un véhicule automobile, caractérisé en ce qu'il comporte l'étape de déterminer des paramètres dimensionnels de balourds liés à un vilebrequin du moteur alternatif à combustion interne par minimisation de niveaux de vibrations et/ou de bruits mesurables dans le véhicule en dehors d'une structure du moteur alternatif à combustion interne.

L'invention permet ainsi de minimiser non pas la quantité de vibrations et/ou de bruits dont est l'objet le seul moteur, mais la quantité de vibrations et/ou de bruits générés par le moteur que peuvent ressentir négativement les occupants dans l'ensemble du véhicule. Ces quantités de vibrations et/ou de bruits sont globalement liées mais pas identiques ni équivalentes du point de vue de la réalisation de l'équilibrage du vilebrequin moteur. Autrement dit, le réglage optimum proposé par l'invention est spécifique au système "véhicule" et pas uniquement au système "moteur seul".

Selon une mise en oeuvre, les niveaux de vibrations et/ou de bruits sont mesurables dans un habitacle du véhicule.

Selon une mise en oeuvre, les niveaux de vibrations et/ou de bruits sont mesurés dans le domaine temporel. Cette variable "temps" présente l'avantage d'être proche du domaine des grandeurs sensibles pour les occupants du véhicule.

Selon une mise en oeuvre, les balourds consistent en au moins deux contrepoids et/ou évidements disposés à des extrémités du vilebrequin du moteur alternatif à combustion interne.

Selon une mise en oeuvre, les paramètres dimensionnels des balourds sont définis notamment par des masses, des distances desdits balourds par rapport à un axe de rotation du vilebrequin, et des positions angulaires desdits balourds relativement à un agencement de manetons du vilebrequin repérées dans des plans perpendiculaires à l'axe de rotation du vilebrequin.

Selon une mise en oeuvre, les niveaux de vibrations ou de bruit sont mesurables au moyen d'un accéléromètre fixé sur un rail d'un siège du véhicule et/ou au moyen d'un microphone situé dans le véhicule au voisinage d'une oreille d'un passager. L'invention s'affranchit ainsi de modélisations physiques dont la représentativité est susceptible d'être trop limitée, en mesurant les vibrations et/ou les bruits directement sur des pièces physiques du véhicule.

Selon une mise en oeuvre, le procédé comporte l'étape de définir une fonction de coût Fc dépendant des niveaux de vibrations et/ou de bruits mesurables mi dans le véhicule et une fonction F dépendant des paramètres dimensionnels pi, reliées par la relation Fc(m1, m2, ..., mi, ..., mn) = F(p1, p2, ..., pi, ..., pn), et dans le cadre d'une mise en oeuvre d'un algorithme itératif, sélectionner dans un premier temps des valeurs initiales des paramètres dimensionnels, puis calculer des valeurs optimales Pi des paramètres dimensionnels pi minimisant la fonction F par itérations successives.

Selon une mise en oeuvre, la fonction de coût consiste en une somme de valeurs efficaces, ou une somme de valeurs maximales mesurables pendant une durée fixée, ou une valeur moyenne de ces grandeurs selon un ordre 1 de rotation du moteur alternatif à combustion interne mesurable au cours d'une montée en régime dudit moteur alternatif.

Selon une mise en oeuvre, les valeurs initiales des paramètres dimensionnels sont des valeurs issues de modèles simplifiés du moteur alternatif à combustion interne seul.

Selon une mise en oeuvre, les valeurs optimales des paramètres dimensionnels doivent en outre respecter des contraintes imposées sur les valeurs des paramètres dimensionnels.

Selon une mise en oeuvre, les contraintes imposées consistent notamment en un poids maximal total de l'ensemble des balourds utilisés et/ou en des distances maximales des balourds par rapport à l'axe de rotation du vilebrequin.

L'invention a également pour objet un moteur alternatif à combustion interne de véhicule automobile dont l'équilibrage inertiel de l'attelage mobile est réalisé suivant le procédé d'équilibrage selon l'invention.

L'invention sera mieux comprise à la lecture de la description qui suit et à l'examen des figures qui l'accompagnent. Ces figures ne sont données qu'à titre illustratif mais nullement limitatif de l'invention.
La figure 1 montre une représentation schématique d'un véhicule automobile avec lequel est mis en oeuvre le procédé d'équilibrage du moteur alternatif à combustion interne selon l'invention;
La figure 2 est une représentation schématique de balourds situés au niveau du moteur alternatif dont les paramètres dimensionnels sont définis à l'aide du procédé d'équilibrage inertiel selon l'invention;

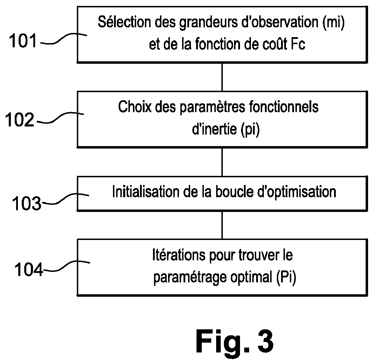

La figure 3 montre un diagramme des différentes étapes du procédé d'équilibrage inertiel optimisé du moteur alternatif à combustion interne selon l'invention.

Les éléments identiques, similaires, ou analogues conservent la même référence d'une figure à l'autre.

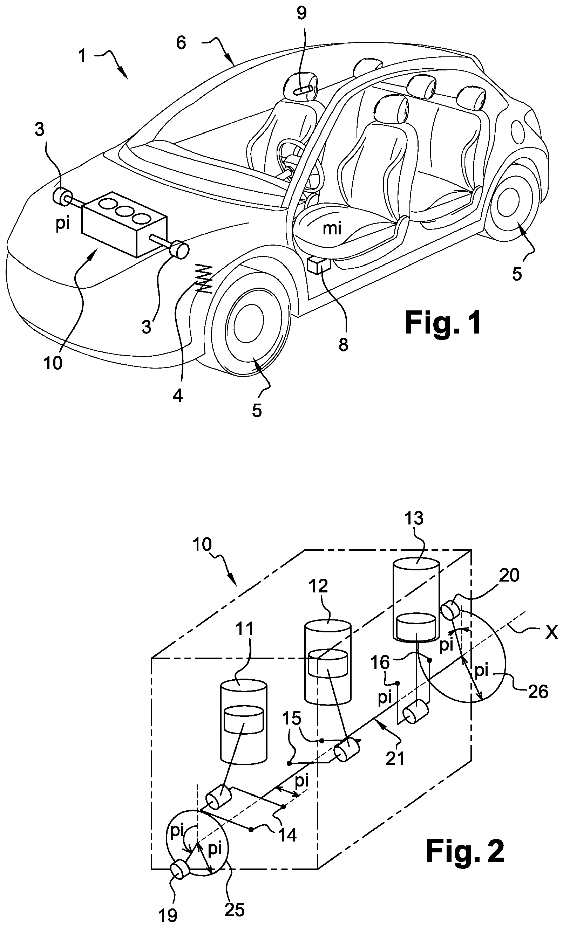

La figure 1 représente un véhicule automobile 1 correspondant au système mécanique avec lequel est mis en oeuvre le procédé d'équilibrage selon l'invention. Ce véhicule 1 comprend notamment les sous-ensembles principaux suivants : un groupe moto-propulseur monté sur des cales de suspension moteur 3 formé par l'assemblage du moteur alternatif et de la boîte de vitesses, des éléments de suspension du véhicule 4, deux trains roulants 5, un habitacle 6 muni notamment de parties ouvrantes, d'habillages, et d'équipements.

Le procédé comporte une première étape 101 de choix des grandeurs d'observation dans le véhicule 1 ainsi que de définition d'une fonction de coût Fc correspondante. Les grandeurs choisies notées "mi" sont des grandeurs mesurables sur ou dans l'habitacle 6 du véhicule, comme par exemple des accélérations mesurables au niveau de points de fixation des sièges sur la caisse véhicule, et/ou des efforts mesurables sous les cales de suspension du moteur (côté caisse véhicule), et/ou des mesures d'écrasement des cales, et/ou des pressions acoustiques mesurables en différents points de l'habitacle 6. Dans un exemple de mise en oeuvre, les niveaux de vibrations et/ou de bruits sont ainsi mesurés au moyen d'un accéléromètre 8 fixé sur un rail d'un siège du véhicule et/ou au moyen d'un microphone 9 situé dans le véhicule au voisinage d'une oreille d'un occupant du véhicule. Les niveaux de vibrations et/ou de bruits mi pourront être mesurés à d'autres endroits dans le véhicule situés en dehors de la structure du moteur qui est formée par le moteur en tant que tel muni de son carter et l'attelage mobile comportant le vilebrequin, les pistons et les bielles correspondantes.

En complément, il est également possible de prendre en compte des grandeurs localisées sur le groupe-motopropulseur, comme par exemple des accélérations mesurables sur les carters du moteur, ou de telles accélérations ramenées à son centre d'inertie. Les fréquences visées sont des "basses fréquences", de préférence inférieures à environ 200 Hz en sorte que le groupe moto-propulseur ne présente que des mouvements dits de corps rigide.

La fonction de coût Fc à minimiser dépendant explicitement de ces grandeurs est notée Fc(m1, m2, ..., mi). Il peut s'agir typiquement d'une somme de valeurs efficaces, ou d'une somme des valeurs maximales mesurables pendant une durée fixée, ou de la valeur moyenne de ces grandeurs selon l'ordre 1 de rotation du moteur mesurable au cours d'une montée en régime du moteur.

On note que l'équilibrage inertiel optimal recherché dépend fortement du choix des grandeurs vibro-acoustiques mi mesurées et de leur combinaison, déterminés par le concepteur en fonction du contexte des projets de développement, qui définira la grandeur globale à minimiser.

Dans une mise en oeuvre simple, on choisit par exemple une seule grandeur m1 correspondant à l'accélération temporelle mesurable dans la direction longitudinale du véhicule sur une vis de fixation du siège conducteur et une fonction de coût Fc associée valant Fc(m1)=sqrt(||m1||²).

Le procédé comporte par ailleurs l'étape 102 de sélection des paramètres de réglage sur lesquels on agit pour réaliser l'équilibrage inertiel du moteur alternatif à combustion interne. Ces paramètres de réglage sont des paramètres dimensionnels notés pi définis notamment par des masses, des distances de balourds par rapport à l'axe de rotation du vilebrequin et des positions angulaires desdits balourds relativement à un agencement des manetons du vilebrequin repérées dans des plans perpendiculaires à l'axe du vilebrequin. Ces positions angulaires sont exprimées généralement en angle relativement à une position de référence du vilebrequin 21, prise par exemple au point mort haut du cylindre 11. Les balourds pourront consister en des contrepoids ou des évidements placés au niveau du moteur alternatif. Le nombre des paramètres pi dépend des degrés de liberté autorisés par le concepteur.

Ainsi, la figure 2 montre un exemple de choix d'équilibrage réalisé pour un moteur thermique à pistons alternatifs 10 à trois cylindres 11-13 appartenant au groupe motopropulseur. Dans cet exemple, on choisit d'utiliser un contrepoids 14-16 par cylindre et d'ajouter un contrepoids 19, 20 à chaque extrémité du vilebrequin 21 d'axe de rotation X. Ces contrepoids 19, 20 sont ainsi situés respectivement au niveau d'une poulie vilebrequin 25 et d'un volant moteur 26. On a ainsi cinq contrepoids dont les paramètres dimensionnels pi sont à déterminer. Alternativement, il est également possible de fixer à l'avance les paramètres dimensionnels pi des trois contrepoids 14-16 en regard de chaque cylindre 11-13 et de se limiter à agir aux extrémités du vilebrequin au moyen de deux contrepoids 19 et 20 uniquement.

Les valeurs des grandeurs observées mi dépendent des valeurs des paramètres dimensionnels pi en sorte que l'on peut établir la relation suivante: Fc(m1, m2, ..., mi, ..., mn) = F(p1, p2, ..., pi, ..., pn).

On choisit de préférence, mais cela ne constitue pas une obligation pratique, la fonction Fc de telle manière que la fonction F a les propriétés mathématiques suffisantes pour conduire à un problème d'optimisation dit "bien posé".

Le procédé comporte ensuite une étape 103 d'initialisation d'une boucle d'optimisation en choisissant un paramétrage initial, approximatif, de l'équilibrage inertiel du moteur. Il s'agit ainsi typiquement de valeurs initiales des paramètres dimensionnels pi issues de modèles simplifiés du moteur seul, telles que celles fournies par le traité de Swoboda. Ainsi, si les masses des contrepoids placés en regard des cylindres font partie des paramètres pi, on pourra leur attribuer comme valeur initiale la masse nécessaire pour au moins équilibrer les masses dites rotatives du moteur thermique.

Le procédé comporte ensuite une étape 104 d'itérations pour trouver le paramétrage optimal d'équilibrage du moteur alternatif à combustion interne. A cet effet, on sélectionne un algorithme d'optimisation parmi ceux connus de l'homme du métier qui permet de calculer efficacement par itérations successives des valeurs optimales Pi des n paramètres pi minimisant la fonction F, ce qui peut s'exprimer par la relation {P1, ..., Pi, ..., Pn} = argmin (F(p1, p2, ..., pi, ..., pn)).

En outre, il est possible que les valeurs optimales des paramètres Pi doivent également respecter des contraintes imposées sur les valeurs que peuvent prendre les paramètres dimensionnels pi. Ces contraintes sont exprimées par l'expression Fcont(p1, p2, ..., pi, ..., pn)=0 , où la fonction Fcont peut, à titre d'exemple, traduire le fait que la somme des masses des contrepoids ajoutés pour l'équilibrage ne doit pas dépasser une certaine valeur, par exemple de 400 grammes. Les contraintes peuvent également consister en des distances maximales des balourds 19, 20 par rapport à l'axe X de rotation du vilebrequin 21.

A chaque itération de l'étape 104, la détermination des paramètres dimensionnels peut demander la réalisation d'un ou plusieurs essais, ces essais pouvant le cas échéant être combinés avec des simulations numériques. Le nombre d'itérations ou le critère d'arrêt de la boucle itérative dépend notamment de la précision utile et/ou du coût en temps de calcul de chaque itération.

A l'issue de l'étape 104, on dispose ainsi d'un jeu de paramètres {P1, , Pi, ., Pn} optimal donnant le meilleur réglage possible pour l'équilibrage inertiel du moteur alternatif vis-à-vis de prestations acoustiques et vibratoires perceptibles par les occupants du véhicule, étant donné les paramètres pi sur lesquels le concepteur se donne la possibilité d'agir.

On note que le résultat des réglages optimum donne par exemple, si on choisit d'équilibrer par un jeu de deux contrepoids ajoutés aux extrémités du vilebrequin, des positions angulaires de ceux-ci non nécessairement de 30° et 30°+180° comme c'est le cas classiquement, mais des positions angulaires ayant des valeurs non déterminables a priori pour un moteur donné car elles sont spécifiques à la configuration de l'ensemble du véhicule à mettre au point.

## Revendications

1. Procédé d'équilibrage inertiel d'un moteur alternatif (10) à combustion interne d'un véhicule automobile, **caractérisé en ce qu'**il comporte l'étape de déterminer des paramètres dimensionnels (pi) de balourds liés à un vilebrequin (21) du moteur alternatif à combustion interne par minimisation de niveaux de vibrations et/ou de bruits (mi) mesurables dans le véhicule (1) en dehors d'une structure du moteur alternatif (10) à combustion interne.

2. Procédé selon la revendication 1, **caractérisé en ce que** les niveaux de vibrations et/ou de bruits (mi) sont mesurables dans un habitacle du véhicule.

3. Procédé selon la revendication 1 ou la revendication 2, **caractérisé en ce que** les niveaux de vibrations et/ou de bruits (mi) sont mesurés dans le domaine temporel.

4. Procédé selon l'une des revendications 1 à 3, **caractérisé en ce que** les balourds consistent en au moins deux contrepoids et/ou évidements (19, 20) disposés à des extrémités du vilebrequin (21) du moteur alternatif (10) à combustion interne.

5. Procédé selon l'une des revendications 1 à 4, **caractérisé en ce que** les paramètres dimensionnels des balourds (19, 20) sont définis notamment par des masses, des distances desdits balourds (19, 20) par rapport à un axe (X) de rotation du vilebrequin (21), et des positions angulaires desdits balourds (19, 20) relativement à un agencement de manetons du vilebrequin (21) repérées dans des plans perpendiculaires à l'axe (X) de rotation du vilebrequin (21).

6. Procédé selon l'une des revendications 1 à 5, **caractérisé en ce que** les niveaux de vibrations ou de bruit sont mesurables au moyen d'un accéléromètre (8) fixé sur un rail d'un siège du véhicule et/ou au moyen d'un microphone (9) situé dans le véhicule au voisinage d'une oreille d'un passager.

7. Procédé selon l'une des revendications 1 à 6, **caractérisé en ce qu'**il comporte l'étape de définir une fonction de coût Fc dépendant des niveaux de vibrations et/ou de bruits mesurables mi dans le véhicule et une fonction F dépendant des paramètres dimensionnels pi, reliées par la relation Fc(m1, m2, ..., mi, ..., mn) = F(p1, p2, ..., pi, ..., pn), et dans le cadre d'une mise en oeuvre d'un algorithme itératif, sélectionner dans un premier temps des valeurs initiales des paramètres dimensionnels, puis calculer des valeurs optimales (Pi) des paramètres dimensionnels (pi) minimisant la fonction F par itérations successives.

8. Procédé selon la revendication 7, **caractérisé en ce que** la fonction de coût (Fc) consiste en une somme de valeurs efficaces, ou une somme de valeurs maximales mesurables pendant une durée fixée, ou une valeur moyenne de ces grandeurs selon un ordre 1 de rotation du moteur alternatif à combustion interne mesurable au cours d'une montée en régime dudit moteur alternatif.

9. Procédé selon la revendication 7 ou la revendication 8, **caractérisé en ce que** les valeurs initiales des paramètres dimensionnels (pi) sont des valeurs issues de modèles simplifiés du moteur alternatif (10) à combustion interne seul.

10. Procédé selon l'une des revendications 7 à 9, **caractérisé en ce que** les valeurs optimales des paramètres dimensionnels (Pi) doivent en outre respecter des contraintes imposées sur les valeurs des paramètres dimensionnels (pi).

11. Procédé selon la revendication 10, **caractérisé en ce que** les contraintes imposées consistent notamment en un poids maximal total de l'ensemble des balourds utilisés et/ou en des distances maximales des balourds par rapport à un axe (X) de rotation du vilebrequin.

## Patentansprüche

1. Verfahren zum Trägheitsauswuchten eines Hubkolbenverbrennungsmotors (10), **dadurch gekennzeichnet, dass** es einen Schritt des Bestimmens der Maßparameter (pi) von Unwuchten in Zusammenhang mit einer Kurbelwelle (21) des Hubkolbenverbrennungsmotors durch Minimieren von Schwingungs- und/oder Geräuschpegeln (mi), die in dem Fahrzeug (1) messbar sind, außerhalb einer Struktur des Hubkolbenverbrennungsmotors (10) zu umfasst.

2. Verfahren nach Anspruch 1, **dadurch gekennzeichnet, dass** die Schwingungs- und/oder Geräuschpegel (mi) in einer Fahrgastzelle des Fahrzeugs messbar sind.

3. Verfahren nach Anspruch 1 oder Anspruch 2, **dadurch gekennzeichnet, dass** die Schwingungs- und/oder Geräuschpegel (mi) im zeitlichen Bereich gemessen werden.

4. Verfahren nach einem der Ansprüche 1 bis 3, **dadurch gekennzeichnet, dass** die Unwuchten aus mindestens zwei Gegengewichten und/oder Aussparungen (19, 20) bestehen, die an Enden der Kurbelwelle (21) des Hubkolbenverbrennungsmotors (10) angeordnet sind.

5. Verfahren nach einem der Ansprüche 1 bis 4, **dadurch gekennzeichnet, dass** die Maßparameter Unwuchten (19, 20) insbesondere durch Massen definiert sind, wobei Distanzen der Unwuchten (19, 20) in Bezug auf eine Rotationsachse (X) der Kurbelwelle (21) und Winkelpositionen der Unwuchten (19, 20) in Bezug auf eine Einrichtung von Zapfen der Kurbelwelle (21), die in Ebenen gekennzeichnet sind, die zu der Rotationsachse (X) der Kurbelwelle (21) senkrecht sind, definiert sind.

6. Verfahren nach einem der Ansprüche 1 bis 5, **dadurch gekennzeichnet, dass** die Schwingungs- oder Geräuschpegel mittels eines Beschleunigungsmessers (8), der auf einer Schiene eines Sitzes des Fahrzeugs befestigt ist, und/oder mittels eines Mikrofons (9), das sich in dem Fahrzeug in der Nähe eines Ohrs eines Insassen befindet, messbar sind.

7. Verfahren nach einem der Ansprüche 1 bis 6, **dadurch gekennzeichnet, dass** es den Schritt des Definierens einer Kostenfunktion Fc umfasst, die von den Schwingungs- und/oder Geräuschpegeln mi, die in dem Fahrzeug messbar sind, abhängen, und einer Funktion F, die von den Maßparameter pi abhängt, die durch die Beziehung Fc (tm1, m2, ..., mi, ..., mn) = F (p1, p2, ..., pi, ..., pn) verbunden sind, und im Rahmen einer Umsetzung eines iterativen Algorithmus, des Auswählens zuerst der Ausgangswerte der Maßparameter, dann des Berechnens der optimalen Werte (Pi) der Maßparameter (pi), die die Funktion F minimieren, durch aufeinanderfolgende Iterationen.

8. Verfahren nach Anspruch 7, **dadurch gekennzeichnet, dass** die Kostenfunktion (Fc) aus einer Summe effizienter Werte oder einer Summe von Höchstwerten, die während einer festgelegten Dauer messbar sind, oder einem mittleren Wert dieser Größen gemäß einem Rang 1 der Drehung Hubkolbenverbrennungsmotors, der im Laufe eines Hochfahrens der Drehzahl des Hubkolbenverbrennungsmotors messbar ist, besteht.

9. Verfahren nach Anspruch 7 oder Anspruch 8, **dadurch gekennzeichnet, dass** die Ausgangswerte der Maßparameter (pi) Werte sind, die aus vereinfachten Modellen des Hubkolbenverbrennungsmotors (10) allein hervorgehen.

10. Verfahren nach einem der Ansprüche 7 bis 9, **dadurch gekennzeichnet, dass** die optimalen Werte der Maßparameter (Pi) außerdem Auflagen einhalten müssen, die den Werten der Maßparameter (pi) auferlegt werden.

11. Verfahren nach Anspruch 10, **dadurch gekennzeichnet, dass** die auferlegten Auflagen insbesondere aus einem maximalen Gesamtgewicht der Einheit der Unwuchten, die verwendet werden, und/oder den maximalen Distanzen der Unwuchten in Bezug zu einer Rotationsachse (X) der Kurbelwelle bestehen.

## Claims

1. A method for the inertia balancing of a reciprocating internal combustion engine (10) of a motor vehicle, **characterized in that** it comprises the step of determining dimensional parameters (pi) of imbalances linked to a crankshaft (21) of the reciprocating internal combustion engine by minimising measurable vibration and/or noise levels (mi) in the vehicle (1) outside a structure of the reciprocating internal combustion engine (10).

2. The method according to Claim 1, **characterized in that** the vibration and/or noise levels (mi) are measurable in a passenger compartment of the vehicle.

3. The method according to Claim 1 or Claim 2, **characterized in that** the vibration and/or noise levels (mi) are measured in the time domain.

4. The method according to one of Claims 1 to 3, **characterized in that** the imbalances consist in at least two counterweights and/or recesses (19, 20) disposed at ends of the crankshaft (21) of the reciprocating internal combustion engine (10).

5. The method according to one of Claims 1 to 4, **characterized in that** the dimensional parameters of the imbalances (19, 20) are defined in particular by masses, distances of said imbalances (19, 20) with respect to a rotation axis (X) of the crankshaft (21), and angular positions of said imbalances (19, 20) relative to an arrangement of crankpins of the crankshaft (21), identified in planes perpendicular to the rotation axis (X) of the crankshaft (21).

6. The method according to one of Claims 1 to 5, **characterized in that** the vibration or noise levels are measurable by means of an accelerometer (8) fixed on a rail of a seat of the vehicle and/or by means of a microphone (9) situated in the vehicle in the vicinity of a passenger's ear.

7. The method according to one of Claims 1 to 6, **characterized in that** it comprises the step of defining a cost function Fc depending on the measurable vibration and/or noise levels mi in the vehicle and a function F depending on the dimensional parameters pi, connected by the relationship Fc (m1, m2, ..., mi, ..., mn) = F (p1, p2, ..., pi, ..., pn), and within the framework of an implementation of an iterative algorithm, selecting firstly initial values of the dimensional parameters, then calculating optimum values (Pi) of the dimensional parameters (pi) minimizing the function F by successive iterations.

8. The method according to Claim 7, **characterized in that** the cost function (Fc) consist in a sum of efficient values, or a sum of measurable maximum values for a fixed duration, or a mean value of these magnitudes according to an order of rotation 1 of the reciprocating internal combustion engine measurable during a revving up of said reciprocating engine.

9. The method according to Claim 7 or Claim 8, **characterized in that** the initial values of the dimensional parameters (pi) are values originating from simplified models of the reciprocating internal combustion engine (10) alone.

10. The method according to one of Claims 7 to 9, **characterized in that** the optimum values of the dimensional parameters (Pi) must furthermore respect constraints imposed on the values of the dimensional parameters (pi).

11. The method according to Claim 10, **characterized in that** the constraints imposed consist in particular in a maximum total weight of the whole of the imbalances used and/or in maximum distances of the imbalances with respect to a rotation axis (X) of the crankshaft.
